# FASCICULE DE BREVET EUROPEEN

(11) **EP 4 551 418 B1**
(45) Date de publication et mention de la délivrance du brevet: **09.09.2026**
(21) Numéro de dépôt: 23741294.5
(22) Date de dépôt: 06.07.2023
(51) Int. Cl.: B60K 15/03, F02M 37/00

(54) **SYSTÈME DE STOCKAGE DE CARBURANT DE VÉHICULE COMPRENANT UNE VESSIE**
KRAFTSTOFFSPEICHERSYSTEM FÜR EIN FAHRZEUG MIT BLASE
VEHICLE FUEL STORAGE SYSTEM INCLUDING BLADDER

(30) Priorité: 07.07.2022 BE 202205554
(43) Date de publication de la demande: 14.05.2025
(73) Titulaire: OPmobility C-Power Belgium Research, 1200 Woluwe-Saint-Lambert (BE)
(72) Inventeur: MADOUX, Dominique, 1200 BRUXELLES (BE); OSZWALD, Pierre, 1200 BRUXELLES (BE); SHIN, Changwook, 1200 BRUXELLES (BE)
(74) Mandataire: LLR
(86) Numéro de dépôt international: PCT/EP2023/068689
(87) Numéro de publication internationale: WO 2024/008858

(56) Documents cités:
- EP-A2- 1 028 017
- WO-A1-2021/013940
- DE-A1- 102018 203 006
- FR-A1- 2 679 841
- FR-A1- 2 972 685
- KR-A- 20040 054 880
- US-A- 5 722 374
- US-A1- 2009 139 994

## Description

L'invention concerne les réservoirs de carburant de véhicule. Plus particulièrement, l'invention concerne un système de stockage de carburant pour véhicule et un procédé de fabrication d'un tel système de stockage de carburant pour véhicule.

Le carburant stocké dans un réservoir de carburant de véhicule est soumis à des fluctuations de température dépendant principalement de la température extérieure. En fonction du climat auquel est soumis le véhicule, la température du carburant peut grandement varier, en particulier si le véhicule se trouve à l'extérieur lorsqu'il roule et lorsqu'il est stationné. Une élévation en température du carburant stocké dans le réservoir génère une évaporation d'une quantité de celui-ci. Etant donné que le réservoir définit un volume fermé, la génération de vapeur de carburant entraine une élévation de pression dans la phase gazeuse à l'intérieur du réservoir. Une pression élevée en vapeur de carburant génère des contraintes mécaniques sur les parois du réservoir, ce qui peut les détériorer ou à tout le moins constituer un risque d'explosion du réservoir si l'élévation en pression n'est pas maitrisée. Le document US 2009/139994 A1 divulgue un procédé de fabrication permettant d'obtenir un réservoir de carburant dans lequel ce problème d'élévation de pression peut se manifester.

Il est connu dans l'état de la technique, par exemple du document WO 2021/013940 A1 ou bien du document KR 2004 0054880 A, de placer une vessie gonflable à l'intérieur du réservoir à carburant. Cette vessie est connectée à un conduit d'entrée et de sortie d'air sortant du réservoir à carburant et permettant, alternativement, d'alimenter la vessie en air ou d'évacuer une partie de l'air contenu dans la vessie. De la sorte, en fonction de la fluctuation de la quantité de vapeur de carburant dans le réservoir, la vessie peut se gonfler ou se dégonfler pour modifier le volume disponible pour la vapeur de carburant et ainsi limiter les variations de pression en vapeur de carburant.

Cette configuration de système à vessie permet bien de réduire le risque d'être confronté à des pics de pression dans le réservoir à carburant, néanmoins il pose certains problèmes. En effet, le volume relativement important de la vessie peut être incompatible avec la forme, généralement complexe, du réservoir à carburant ou, inversement, peut amener à devoir modifier la forme du réservoir à carburant afin qu'il présente une zone de forme et de dimensions permettant de recevoir la vessie. A titre d'exemple, pour un réservoir de carburant de 45 litres, la vessie doit avoir un volume d'environ 20 litres pour avoir un effet bénéfique significatif, ce qui nécessite une zone suffisamment large et dégagée à l'intérieur du réservoir pour recevoir la vessie. De plus, l'important volume de la vessie rend son introduction et sa fixation dans le réservoir complexe à mettre en œuvre lors de la fabrication du réservoir, ce qui implique une augmentation du coût et de la durée de fabrication du réservoir.

L'invention a notamment pour but de résoudre les problèmes identifiés dans l'état de la technique en limitant la montée en pression de vapeur de carburant dans le réservoir et en évitant ou atténuant les inconvénients posés par la vessie de l'état de la technique et son important volume.

A cet effet, l'invention a pour objet un système de stockage de carburant pour véhicule, comprenant :
- un réservoir à carburant,
- un organe de support s'étendant à l'intérieur du réservoir, et
- plusieurs vessies gonflables s'étendant à l'intérieur du réservoir, chacune des vessies gonflables étant portée par l'organe de support et fixée sur l'organe de support.

Ainsi, le système de stockage de carburant à vessie unique de l'art antérieur est ici remplacé par un système de stockage de carburant comprenant plusieurs vessies portées par un organe de support. On comprend, qu'à volume total des vessies égal, le système selon l'invention comporte des vessies de plus petit volume qu'il est plus simple d'agencer dans le volume interne du réservoir, ce sans qu'il ne soit nécessaire que le réservoir présente une zone spécialement agencée pour recevoir les vessies.

En outre, le fait que les vessies soient portées par un organe de support facilite grandement la fabrication du système de stockage de carburant. En effet, il est possible de préparer l'organe de support et d'y rapporter les vessies avant leur insertion dans une paraison en vue d'être mouler pour former le réservoir. De la sorte, la fabrication du système de stockage de carburant est moins complexe à mettre en œuvre, dans la mesure où certaines de ses étapes sont simplifiées et imposent moins de contraintes pour être réalisées.

Par ailleurs, dans un mode de réalisation dans lequel les vessies ne sont pas connectées entre elles, le fait de disposer de plusieurs vessies permet au système de stockage de carburant de continuer de fonctionner dans le cas d'un dysfonctionnement d'une des vessies, contrairement au système de l'art antérieur. On améliore ainsi la fiabilité du système de stockage de carburant.

Avantageusement, les vessies sont réalisées en polyéthylène (PE), en polyamide (PA), ou sous la forme d'un multicouche comprenant du polyéthylène (PE), préférentiellement du polyéthylène haute densité (PEHD), et de l'éthylène alcool vinylique (EVOH).

Préférentiellement, le polyéthylène est du polyéthylène haute densité (PEHD), et le polyamide est du polyamide 6, 11 ou 12 (PA6, PA11 ou PA12).

Avantageusement, le multicouche comprend une couche adhésive ménagée entre la couche de polyéthylène (PE), préférentiellement de polyéthylène haute densité (PEHD), et la couche d'éthylène alcool vinylique (EVOH).

On peut ainsi choisir différents matériaux pour réaliser les vessies afin de leur conférer un choix de caractéristiques, telles que des caractéristiques de faible coût, de résistance mécanique ou d'imperméabilité au carburant.

Avantageusement, chaque vessie présente un volume maximal compris entre 5 et 15 litres.

Avantageusement, chaque vessie présente un volume maximal différent.

Avantageusement, chaque vessie présente une forme différente.

Avantageusement, la somme du volume maximal de chacune des vessies est comprise entre 25 et 35 litres, préférentiellement égale à 30 litres.

On peut ainsi aisément dimensionner les vessies en fonction d'un cahier des charges auquel doit se conformer le système de stockage de carburant et le réservoir. En d'autres termes, on peut facilement adapter la forme et le volume des vessies pour arriver à un volume total des vessies prédéterminé tout en tenant compte de l'architecture du réservoir à carburant, ce qui illustre la souplesse d'utilisation de l'invention.

Avantageusement, les vessies sont configurées pour se déformer, lors de leur gonflage ou dégonflage, dans deux directions opposées. Selon un mode de réalisation de l'invention, les vessies sont configurées pour se déformer selon un axe Z qui est vertical lorsque le système de stockage équipe un véhicule se trouvant sur un sol horizontal.

On fournit ainsi plus de liberté dans le positionnement des vessies dans le réservoir. Si les vessies étaient configurées pour se déformer dans une seule direction, il serait nécessaire de prévoir un grand débattement dans cette direction pour les vessies. Ce n'est pas le cas de la configuration dans laquelle la déformation peut s'effectuer dans les deux directions opposées.

Avantageusement, au moins une des vessies est équipée de moyens de couplage configurés pour recevoir un accessoire.

On permet ainsi aux vessies d'assurer une fonction supplémentaire dans le système de stockage de carburant, ce qui permet d'éviter d'avoir à prévoir un élément spécifiquement conçu pour cette fonction. Cela permet ainsi de réduire l'encombrement dans le réservoir et de simplifier la conception du système de stockage de carburant.

Avantageusement, chaque vessie est équipée d'une vanne configurée pour, alternativement, permettre ou empêcher leur gonflage et dégonflage.

On permet ainsi une utilisation des vessies qui peut être adaptée en fonction de la pression à l'intérieur du réservoir.

Avantageusement, le système de stockage de carburant comporte un circuit d'air comprenant :
- un nœud,
- des tronçons d'alimentation connectant le nœud au volume interne de chacune des vessies, et
- un tronçon de sortie connectant le nœud à une sortie du réservoir.

Les vessies fonctionnent ainsi avec un unique circuit d'air, ce qui simplifie leur utilisation. De plus, cela simplifie aussi leur agencement dans le réservoir, dans la mesure où il n'est nécessaire de prévoir qu'une unique ouverture dans le réservoir pour permettre l'entrée et la sortie d'air dans les vessies.

De préférence, la sortie du réservoir débouche sur un filtre, par exemple un filtre à charbon actif ou canister, situé à l'extérieur du réservoir.

Ainsi, même si de la vapeur de carburant pénètre à l'intérieur des vessies et se mélange à l'air qui les contient, la vapeur de carburant n'est pas rejetée dans l'atmosphère mais est captée par le filtre.

Avantageusement, l'organe de support comprend un moyen de fixation de vessie, préférentiellement le moyen de fixation de vessie est sélectionné parmi la liste suivante : clippage, fixation de type glissière, soudure.

On s'assure ainsi que les vessies sont bien fixées sur l'organe de support, le moyen de fixation pouvant être réalisé par des moyens simples et peu onéreux.

Avantageusement, l'organe de support est fixé sur au moins une paroi du réservoir ou sur au moins un pilier s'étendant à l'intérieur du réservoir.

On peut ainsi choisir la manière dont on fixe l'organe de support à l'intérieur du réservoir, ce qui donne plus de liberté dans le positionnement de l'organe de support à l'intérieur du réservoir.

Avantageusement, le système de stockage de carburant comprend en outre au moins un organe de stockage de chaleur, s'étendant à l'intérieur du réservoir, comprenant un matériau à changement de phase présentant un point de fusion compris entre 18° et 40°C, le matériau à changement de phase étant préférentiellement choisi parmi la liste suivante : chlorure de calcium hexahydraté (CaCl₂.6H₂O), octadécane (C₁₈H₃₈), cyclohexanol (C₆H₁₂O), un dérivé de la glycérine.

L'au moins un organe de stockage de chaleur permet d'absorber de la chaleur, en particulier lorsque le carburant présente une température proche du point de fusion du matériau à changement de phase. En effet, la réaction de fusion étant endothermique, elle consomme de la chaleur du carburant. L'au moins un organe de stockage de chaleur permet ainsi de limiter l'élévation en température du carburant et donc de limiter la génération de vapeur de carburant dans le réservoir. Grâce à cette limitation de la génération de vapeur de carburant, on peut dimensionner les vessies avec un volume total moins important, de sorte qu'on réduit les inconvénients liés au volume total des vessies, notamment la limitation du volume utile du réservoir. On comprend ainsi que les effets combinés de l'au moins un organe de stockage de chaleur et des vessies surpassent les effets procurés par l'au moins un organe de stockage de chaleur et les vessies considérés isolément.

Avantageusement, le système de stockage de carburant comprend en outre au moins un organe d'espacement fixé à l'organe de support et configuré pour empêcher tout contact entre le réservoir et l'organe de support lors de la fabrication du système de stockage de carburant.

On évite ainsi que l'organe de support ne risque de se détériorer lors de la fabrication du réservoir. En effet, la fabrication du réservoir se fait généralement par un procédé de moulage d'une paraison, cette dernière étant portée à une température suffisamment élevée pour qu'elle soit malléable. La paraison chaude pourrait chauffer l'organe de support et potentiellement la déformer localement sans que cela ne soit souhaité. Une telle déformation pourrait nuire à la tenue mécanique de l'organe de support, voire gêner le fonctionnement des vessies, c'est pourquoi il est préférable de protéger l'organe de support avec l'organe d'espacement.

Avantageusement, chaque vessie est équipée d'une coque de protection entourant ladite vessie.

On évite ainsi que les vessies ne risquent de se détériorer lors de la fabrication du réservoir. En effet, comme indiqué précédemment, la fabrication du réservoir se fait généralement par un procédé de moulage d'une paraison, cette dernière étant portée à une température suffisamment élevée pour qu'elle soit malléable. La paraison chaude pourrait chauffer les vessies et potentiellement les déformer localement sans que cela ne soit souhaité, d'autant que les vessies présentent généralement une épaisseur de l'ordre du millimètre. Une telle déformation pourrait nuire à la tenue mécanique de l'organe de support, voire gêner le fonctionnement des vessies, c'est pourquoi il est préférable de protéger les vessies avec les coques de protection. En outre, les coques de protection protègent les vessies des vagues de carburant pouvant être générées dans le réservoir en cas d'accélération ou de décélération brutale du véhicule.

On prévoit également selon l'invention un procédé de fabrication d'un système de stockage de carburant pour véhicule, dans lequel on met en œuvre au moins les étapes suivantes, préférentiellement de manière successive :
- mise à disposition d'une paraison dans un moule ouvert,
- pose, sur une canne d'insertion ou un bras de robot, d'un organe de support et de plusieurs vessies gonflables, chacune des vessies gonflables étant portée par l'organe de support et fixée sur l'organe de support,
- insertion, à l'intérieur de la paraison, de l'organe de support et des vessies portés par la canne d'insertion ou le bras de robot,
- pré-soufflage de la paraison et mise de la paraison en contact, directement ou indirectement, avec l'organe de support,
- retrait de la canne d'insertion ou du bras de robot,
- fermeture du moule, et
- soufflage de la paraison pour obtenir un réservoir contenant l'organe de support et les vessies.

Comme indiqué précédemment, le fait que les vessies soient portées par un organe de support facilite grandement la fabrication du système de stockage de carburant. On prépare l'organe de support et on lui rapporte les vessies au début du procédé, et ensuite on insère l'ensemble dans la paraison chaude en vue d'être moulée pour former le réservoir. La fabrication du système de stockage de carburant est moins complexe à mettre en œuvre, dans la mesure où certaines de ses étapes sont simplifiées et imposent moins de contraintes pour être réalisées. En particulier, moins d'opérations de fixation doivent être réalisés à l'intérieur de la paraison chaude ou à l'intérieur du réservoir moulé, ce qui correspond à des configurations dans lesquelles le volume d'intérieur de la paraison ou du réservoir est difficile d'accès, ce qui rend compliquée la manipulation de l'organe de support et des vessies.

Avantageusement, avant l'étape d'insertion, on fixe au moins un organe d'espacement sur l'organe de support, l'organe d'espacement étant configuré pour empêcher tout contact direct entre la paraison et l'organe de support pendant l'étape de fermeture partielle du moule.

Avantageusement, avant l'étape d'insertion, on équipe chaque vessie d'une coque de protection entourant ladite vessie, chaque coque de protection étant configuré pour empêcher tout contact direct entre la paraison et les vessies pendant l'étape d'insertion et l'étape de fermeture partielle du moule.

### Brève description des figures

L'invention sera mieux comprise à la lecture de la description qui va suivre donnée uniquement à titre d'exemple et faite en se référant aux dessins annexés dans lesquels :
[Fig.1] la [Fig.1] est une vue schématique et générale d'un système de stockage de carburant selon l'invention,
[Fig.2] la [Fig.2] est une vue en coupe d'un système de stockage de carburant selon un mode de réalisation de l'invention,
[Fig.3] la [Fig.3] est une vue en perspective d'un organe de support portant trois vessies ménagé à l'intérieur du système de stockage de carburant de la [Fig.2],
[Fig.4] la [Fig.4] est une vue en perspective d'une des vessies de la [Fig.3],
[Fig.5] la [Fig.5] est une vue en perspective de l'organe de support de la [Fig.3],
[Fig.6] la [Fig.6] est une vue en perspective d'un organe d'espacement équipant le système de stockage de carburant de la [Fig.2], et
[Fig.7] la [Fig.7] est une vue en perspective d'une coque de protection équipant le système de stockage de carburant de la [Fig.2].

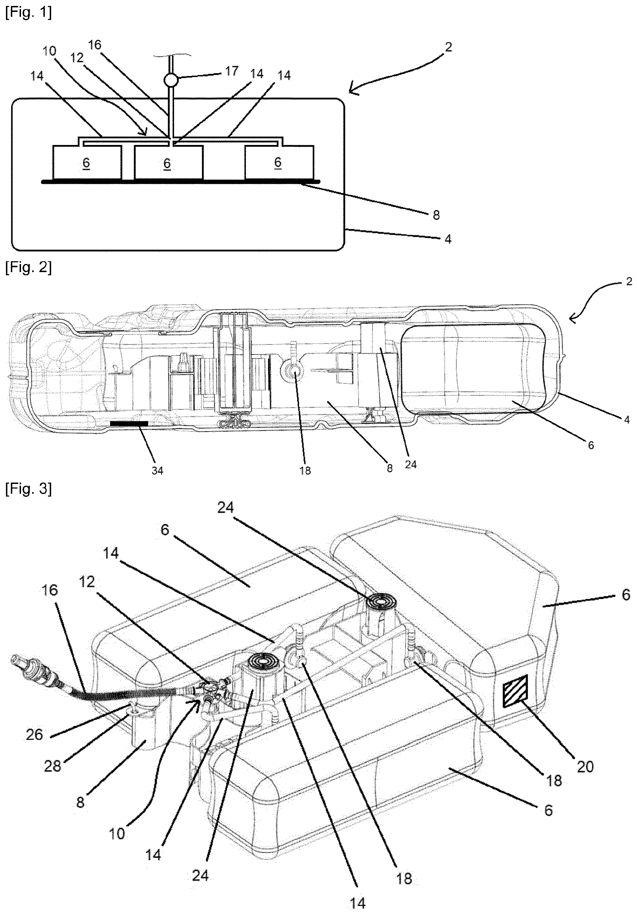

On a représenté, en [Fig.1], un système de stockage de carburant pour véhicule 2 selon l'invention dans sa généralité et, en [Fig.2], un système de stockage de carburant selon un mode de réalisation de l'invention.

Le système de stockage de carburant 2 comprend un réservoir de carburant 4, généralement réalisé en matière plastique, configuré pour stocker le carburant qui est utilisé par le véhicule notamment pour sa propulsion. Le réservoir 4 définit un volume interne dans lequel s'étend le carburant aussi bien sous forme liquide que sous forme gazeuse, selon une répartition dépendant notamment des conditions de pression et de température à l'intérieur du réservoir 4. Le réservoir comprend généralement un conduit de remplissage, permettant le remplissage du réservoir avec le carburant, un conduit de ventilation permettant l'évacuation des vapeurs de carburant sous certaines conditions et un conduit d'injection permettant d'acheminer le carburant vers le moteur du véhicule. Ces trois conduits sont bien connus de l'état de la technique, de sorte qu'ils ne sont pas représentés sur les figures et ne seront pas décrits davantage dans ce qui suit.

Le système de stockage de carburant 2 comprend plusieurs vessies gonflables 6 s'étendant à l'intérieur du réservoir 4 et portées par un organe de support 8 s'étendant intégralement à l'intérieur du réservoir 4. L'organe de support 8 portant les vessies 6 est représenté plus en détails sur la [Fig.3].

Chaque vessie 6 comprend une paroi déformable élastiquement permettant un gonflage et un dégonflage de celle-ci sans qu'elle ne se déforme plastiquement. Les vessies sont ici réalisées en polyéthylène (PE), en polyamide (PA), ou sous la forme d'un multicouche comprenant du polyéthylène (PE) et de l'éthylène alcool vinylique (EVOH). Préférentiellement, le polyéthylène est du polyéthylène haute densité (PEHD), le polyamide est du polyamide 6, 11 ou 12 (PA6, PA11 ou PA12), et multicouche comprend une couche adhésive ménagée entre une couche de polyéthylène haute densité et la couche d'éthylène alcool vinylique.

Afin de permettre le gonflage et le dégonflage des vessies 6, le système de stockage de carburant 2 comprend un circuit d'air 10 connecté d'une part aux vessies 6 et d'autre part à un système d'alimentation en air (non représenté) situé hors du réservoir 4. Grâce au circuit d'air 10, il est possible, alternativement, de remplir les vessies 6 avec de l'air de sorte qu'elles occupent un plus grand volume total dans le réservoir 4 et d'évacuer une partie de l'air contenu dans les vessies 6 afin qu'elles occupent un plus petit volume total dans le réservoir 4. Les vessies sont configurées pour se déformer, lors de leur gonflage ou dégonflage, dans deux directions opposées, à savoir vers le haut et vers le bas dans la configuration du système de stockage de carburant 2 de la [Fig.2].

Le circuit d'air 10 comprend un nœud 12, des tronçons d'alimentation 14 connectant le nœud 12 au volume interne de chacune des vessies 6 et un tronçon de sortie 16 connectant le nœud à une sortie du réservoir 4. La sortie du réservoir 4 débouche sur un filtre 17, par exemple un filtre à charbon ou canister, situé à l'extérieur du réservoir 4, puis sort du système de stockage de carburant 2.

Ici, le nœud 12 forme simplement une connexion fluidique entre les tronçons d'alimentation 14 et le tronçon de sortie 16, mais on peut prévoir qu'il soit formé par une vanne à quatre voies.

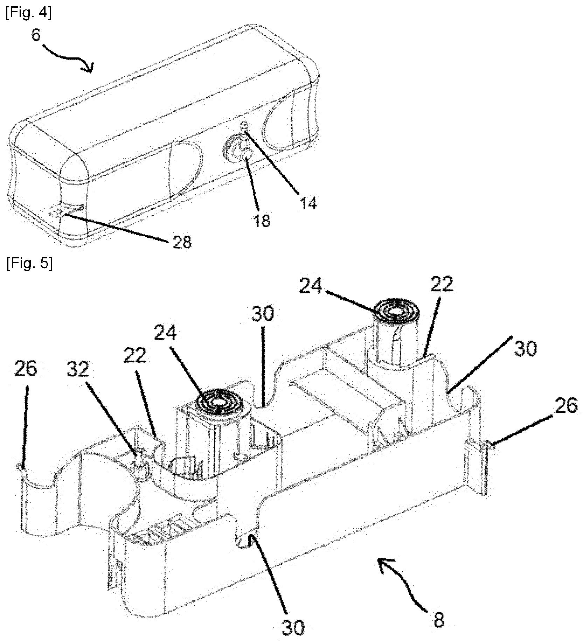

Comme cela est représenté sur la [Fig.4], chaque vessie 6 est équipée d'une vanne 18 configurée pour, alternativement, permettre ou empêcher leur gonflage et dégonflage. La vanne 18 de chaque vessie est ménagée sur son tronçon d'alimentation 14. Les vannes 18 permettent, à tout instant, de rendre active ou inactive chacune des vessies 6. En d'autres termes, lorsqu'une vanne 18 est fermée, l'air contenu dans la vessie 6 à laquelle elle est associée reste bloqué dans la vessie 6 tant que la vanne 18 n'est pas ouverte.

Les vessies 6 sont ici au nombre de trois, mais on peut prévoir un tout autre nombre de vessies, par exemple deux ou plus de quatre, ce nombre pouvant être choisi en fonction du volume et de la forme du réservoir 2. Chaque vessie 6 présente un volume maximal, différent ou non, ici compris entre 5 et 15 litres, et la somme du volume maximal des vessies est ici comprise entre 25 et 35 litres, par exemple égale à 30 litres. Là encore, le volume maximal de chaque vessie et la somme du volume maximal des vessies est choisies en fonction du volume et de la forme du réservoir, les gammes de valeurs proposées pouvant être adaptées à certains types des réservoirs de véhicules automobiles.

Au moins une des vessies 6 est équipée de moyens de couplage 20 configurés pour recevoir un accessoire, pouvant être un accessoire actif ou passif et quelle que soit sa fonction dans le système de stockage de carburant 2.

On a représenté l'organe de support 8 plus en détails sur la [Fig.5]. L'organe de support 8 a une forme générale d'emporte-pièce dont le contour lui permet de s'adapter à l'architecture du réservoir 4 et aux éléments situés à l'intérieur de celui-ci. Il présente ainsi parties concaves 22 permettant le passage de piliers 24 formant des éléments de renfort interne du réservoir 4, voire la fixation sur au moins un de ces piliers 24.

L'organe de support 8 comprend des premiers moyens de fixation 26 configurés pour coopérer avec des seconds moyens de fixation 28 ménagés sur les vessies 6 pour assurer la fixation des vessies 6 sur l'organe de support 8. Ici, les premiers et seconds moyens de fixation 26, 28 forment une liaison glissière assurée par des parties mâles ménagées sur l'organe de support 8 et des parties femelles ménagées sur les vessies 6. A titre de variante de réalisation, les premiers et seconds moyens de fixation peuvent être réalisés sous la forme d'un clippage ou d'une soudure. Dans ce dernier cas, les premiers et seconds moyens de fixation sont formés par des surfaces convenant pour une soudure des vessies sur l'organe de support.

L'organe de support 8 comprend des encoches 30 configurées pour réceptionner une extrémité des tronçons d'alimentation 14 et une partie des vannes 18 afin que ceux-ci ne soient pas déformés par l'organe de support 8, ce qui pourrait gêner leur fonctionnement.

L'organe de support 8 comprend un socle 32 agencé pour recevoir fixement le nœud 12 du circuit d'air 10. Cela permet de réduire les mouvements du circuit d'air 10 dans le réservoir 4, par exemple occasionnés par les vagues de carburant, qui pourraient endommager le circuit d'air ou désolidariser les tronçons d'alimentation 14 des vessies 6.

Le système de stockage de carburant 2 comprend optionnellement au moins un organe de stockage de chaleur 34, s'étendant à l'intérieur du réservoir 4 et ici fixé sur une paroi de fond du réservoir 4 du côté intérieur de celui-ci, configuré pour échanger de la chaleur avec le carburant.

L'organe de stockage de chaleur 34 comprend un matériau à changement de phase logé dans une enceinte imperméable à ce matériau et au carburant de sorte que l'enceinte ne permet pas un échange de matière entre le carburant et l'organe de stockage de chaleur 34. En revanche, l'enceinte de l'organe de stockage de chaleur 34 est conductrice de chaleur, de sorte qu'elle permet les échanges de chaleur entre le carburant et le matériau à changement de phase. Le matériau à changement de phase présente un point de fusion compris entre 18° et 40°C. A titre d'exemples de réalisation, le matériau à changement de phase est choisi parmi la liste suivante : chlorure de calcium hexahydraté (CaCl₂.6H₂O), octadécane (C₁₈H₃₈), cyclohexanol (C₆H₁₂O), un dérivé de la glycérine. De manière plus préférentielle, le matériau à changement de phase présente un point de fusion compris entre 20° et 30°C, c'est-à-proche de la gamme de température dans laquelle évolue la température du carburant.

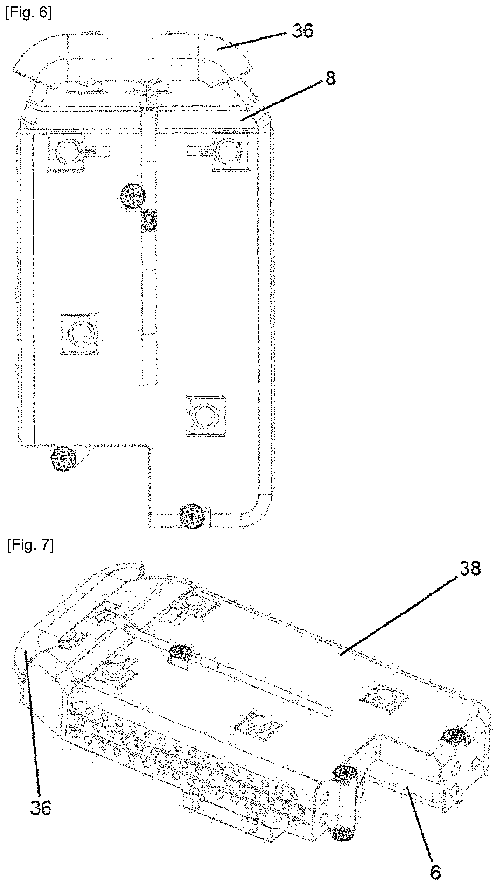

En référence à la [Fig.6], le système de stockage de carburant 2 comprend au moins un organe d'espacement 36 fixé à l'organe de support 8 et configuré pour empêcher tout contact entre le réservoir et l'organe de support lors de la fabrication du système de stockage de carburant 2. En référence à la [Fig.7], chaque vessie 6 est équipée d'une coque de protection 38 entourant ladite vessie 6. Dans le mode de réalisation de la [Fig.7], le système de stockage de carburant 2 comprend une unique coque de protection 38 commune à toutes les vessies 6. Selon une variante de réalisation, le système de stockage de carburant comprend autant de coques de protection que de vessies. Les fonctions de l'organe d'espacement et de la coque de protection 38 seront présentées plus détails plus loin.

Lorsque le carburant monte en température, par exemple lorsque la température extérieure devient supérieure à la température du carburant, une partie du carburant est évaporé, ce qui génère de la vapeur de carburant dans le réservoir 4. Etant donné que le réservoir 4 définit un volume fermé, l'augmentation de la quantité de vapeur de carburant augmente la pression dans la phase gazeuse à l'intérieur du réservoir. On va maintenant décrire comment le système de stockage de carburant 2 selon l'invention permet de limiter cette augmentation de pression.

Les vessies 6 sont comprimées sous l'action de la pression dans la phase gazeuse à l'intérieur du réservoir 4. La paroi des vessies 6 étant déformable, un équilibre des contraintes s'appliquant sur ces parois est établi, cet équilibre conduisant à l'évacuation d'une partie de l'air contenu dans les vessies 6 au moyen du circuit d'air 10 pour les vessies dont la vanne 18 est ouverte. De la sorte, le volume de ces vessies 6 s'étendant dans le réservoir 4 diminue, et le volume occupé par la vapeur de carburant augmente, ce qui résulte en une diminution de la pression en vapeur de carburant. Lorsque la température du carburant finit par diminuer, par exemple lorsque la température extérieure devient inférieure à la température du carburant, une partie de la vapeur de carburant se condense. La quantité de vapeur de carburant dans le réservoir 4 diminue alors, ainsi que la pression en vapeur de carburant. Un nouvel équilibre des contraintes sur la paroi des vessies 6 est établi, cet équilibre conduisant à un remplissage des vessies 6 au moyen du circuit d'air 10 et à une augmentation du volume des vessies 6 s'étendant dans le réservoir 4.

En cas de présence d'au moins un organe de stockage de chaleur 34, ce dernier possède une capacité thermique qui lui permet d'absorber une partie de la chaleur du carburant. Lorsque la température de l'organe de stockage de chaleur 34 atteint le point de fusion du matériau à changement de phase, ce matériau commence à fondre. La réaction de fusion étant endothermique, le matériau à changement de phase absorbe de la chaleur du carburant pour alimenter cette réaction, ce qui permet de limiter l'élévation en température du carburant. En d'autres termes, on limite l'augmentation de pression en vapeur de carburant dans le réservoir en limitant l'augmentation en température du carburant.

On peut prévoir que les vessies soient équipées d'une restriction pour permettre le gonflage ou le dégonflage suivant un débit spécifique.

On va maintenant décrire un procédé de fabrication du système de stockage de carburant 2. Les étapes présentées dans ce qui suit se déroulent successivement.

On commence par mettre à disposition une paraison à l'état fondu dans un moule ouvert. La paraison est destinée à former les parois du réservoir 4. Le moule présente une forme correspondant à la forme qui sera donnée au réservoir 4. La paraison est généralement réalisée en polyéthylène.

On pose, sur une canne d'insertion ou un bras de robot, l'organe de support 8 portant les vessies gonflables 6. De manière optionnelle, un mécanisme peut être prévu à ce stade sur l'organe de support et configuré pour empêcher un déploiement ou expansion prématuré des vessies.

Avant l'étape d'insertion à venir, on fixe l'au moins un organe d'espacement 36 sur l'organe de support 8, et on équipe les vessies 6 de la coque de protection 38.

On insère, à l'intérieur de la paraison, l'organe de support 8 et les vessies 6 portés par la canne d'insertion ou le bras de robot. En cas de présence d'un mécanisme tel que prévu au paragraphe précédent, on actionne à ce stade ce mécanisme, par exemple à l'aide de la canne d'insertion ou du bras de robot, de manière à libérer les vessies et ne plus empêcher leur déploiement ou expansion.

On pré-souffle la paraison et on la met en contact, directement ou indirectement, avec l'organe de support. Après ce pré-soufflage, l'organe de support 8 et les vessies 6 sont maintenues en position, d'une part, par la paraison pré-soufflée et, d'autre part, par la canne d'insertion ou le bras de robot. L'organe de support 8 et les vessies 6 sont protégés de la paraison par, respectivement, l'organe d'espacement 36 et la coque de protection 36. A cette fin, l'organe d'espacement 36 et la coque de protection 38 sont réalisés dans un matériau présentant un point de fusion plus élevé que celui du matériau de la paraison, de sorte que la paraison glisse contre l'organe d'espacement 36 et la coque de protection 38 sans endommager l'organe de support 8 et les vessies 6. L'organe d'espacement 36 et la coque de protection 38 sont ici réalisés en polyéthylène haute densité (PEHD), en polyoxyméthylène (POM), en polyphtalamide (PPA) ou dans un thermoplastique présentant un point de fusion plus élevé que celui du matériau de la paraison. Ces matériaux présentent un point de fusion plus élevé que le polyéthylène constituant la paraison.

On retire la canne d'insertion ou le bras de robot, de sorte que l'organe de support 8 et les vessies 6 ne sont plus maintenues en position que par la paraison et le moule. On peut à ce stade fixer l'organe de support 8 à la paraison, par exemple par soudure, auquel cas l'organe de support comprend au moins une zone de soudure permettant la mise en œuvre d'une soudure de l'organe de support à la paraison.

On ferme le moule, puis on souffle la paraison pour obtenir le réservoir 4 contenant l'organe de support 8 et les vessies 6. Le réservoir 4 est ainsi obtenu par un procédé de moulage par soufflage.

### Liste de références

2 : système de stockage de carburant
4 : réservoir
6 : vessie
8 : organe de support
10 : circuit d'air
12 : nœud
14 : tronçon d'alimentation
16 : tronçon de sortie
17 : filtre
18 : vanne
20 : moyens de couplage
22 : partie concave
24 : pilier
26 : premiers moyens de fixation
28 : seconds moyens de fixation
30 : encoche
32 : socle
34 : organe de stockage de chaleur
36 : organe d'espacement
38 : coque de protection

## Revendications

1. Système de stockage de carburant (2) pour véhicule, comprenant :
- un réservoir à carburant (4),
- un organe de support (8) s'étendant à l'intérieur du réservoir (4), et
- plusieurs vessies gonflables (6) s'étendant à l'intérieur du réservoir (4), chacune des vessies gonflables (6) étant portée par l'organe de support (8) et fixée sur l'organe de support (8).

2. Système de stockage de carburant (2) pour véhicule selon la revendication 1, dans lequel les vessies (6) sont réalisées en polyéthylène (PE), en polyamide (PA), ou sous la forme d'un multicouche comprenant du polyéthylène (PE) et de l'éthylène alcool vinylique (EVOH).

3. Système de stockage de carburant (2) pour véhicule selon l'une quelconque des revendications précédentes, dans lequel chaque vessie (6) présente un volume maximal compris entre 5 et 15 litres.

4. Système de stockage de carburant (2) pour véhicule selon l'une quelconque des revendications précédentes, dans lequel la somme du volume maximal de chacune des vessies (6) est comprise entre 25 et 35 litres, préférentiellement égale à 30 litres.

5. Système de stockage de carburant (2) pour véhicule selon l'une quelconque des revendications précédentes, dans lequel les vessies (6) sont configurées pour se déformer, lors de leur gonflage ou dégonflage, dans deux directions opposées.

6. Système de stockage de carburant (2) pour véhicule selon l'une quelconque des revendications précédentes, dans lequel au moins une des vessies (6) est équipée de moyens de couplage (20) configurés pour recevoir un accessoire.

7. Système de stockage de carburant (2) pour véhicule selon l'une quelconque des revendications précédentes, dans lequel chaque vessie (2) est équipée d'une vanne (18) configurée pour, alternativement, permettre ou empêcher leur gonflage et dégonflage.

8. Système de stockage de carburant (2) pour véhicule selon l'une quelconque des revendications précédentes, comprenant un circuit d'air (10) comprenant :
- un nœud (12),
- des tronçons d'alimentation (14) connectant le nœud (12) au volume interne de chacune des vessies (6), et
- un tronçon de sortie (16) connectant le nœud (12) à une sortie du réservoir (4).

9. Système de stockage de carburant (2) pour véhicule selon la revendication précédente, dans lequel la sortie du réservoir (4) débouche sur un filtre (17), par exemple un filtre à charbon actif ou canister, situé à l'extérieur du réservoir (4).

10. Système de stockage de carburant (2) pour véhicule selon l'une quelconque des revendications précédentes, dans lequel l'organe de support (8) comprend un moyen de fixation de vessie (26, 28), préférentiellement le moyen de fixation de vessie (26, 28) est sélectionné parmi la liste suivante : clippage, fixation de type glissière, soudure.

11. Système de stockage de carburant (2) pour véhicule selon l'une quelconque des revendications précédentes, dans lequel l'organe de support (8) est fixé sur au moins une paroi du réservoir (4) ou sur au moins un pilier (24) s'étendant à l'intérieur du réservoir (4).

12. Système de stockage de carburant (2) pour véhicule selon l'une quelconque des revendications précédentes, comprenant en outre au moins un organe de stockage de chaleur (34), s'étendant à l'intérieur du réservoir, comprenant un matériau à changement de phase présentant un point de fusion compris entre 18° et 40°C, le matériau à changement de phase étant de préférence choisi parmi la liste suivante : chlorure de calcium hexahydraté (CaCl₂.6H₂O), octadécane (C₁₈H₃₈), cyclohexanol (C₆H₁₂O), un dérivé de la glycérine.

13. Système de stockage de carburant (2) pour véhicule selon l'une quelconque des revendications précédentes, comprenant en outre au moins un organe d'espacement (36) fixé à l'organe de support (8) et configuré pour empêcher tout contact entre le réservoir (4) et l'organe de support (8) lors de la fabrication du système de stockage de carburant (2).

14. Système de stockage de carburant (2) pour véhicule selon l'une quelconque des revendications précédentes, dans lequel chaque vessie (6) est équipée d'une coque de protection (38) entourant ladite vessie (6).

15. Procédé de fabrication d'un système de stockage de carburant (2) pour véhicule, dans lequel on met en œuvre au moins les étapes suivantes :
- mise à disposition d'une paraison dans un moule ouvert,
- pose, sur une canne d'insertion ou un bras de robot, d'un organe de support (8) et de plusieurs vessies gonflables (6), chacune des vessies gonflables (6) étant portée par l'organe de support (8) et fixée sur l'organe de support (8),
- insertion, à l'intérieur de la paraison, de l'organe de support (8) et des vessies (6) portés par la canne d'insertion ou le bras de robot,
- pré-soufflage de la paraison et mise de la paraison en contact, directement ou indirectement, avec l'organe de support (8),
- retrait de la canne d'insertion ou du bras de robot,
- fermeture du moule, et
- soufflage de la paraison pour obtenir un réservoir (4) contenant l'organe de support (8) et les vessies (6).

16. Procédé de fabrication d'un système de stockage de carburant (2) pour véhicule selon la revendication précédente, dans lequel, avant l'étape d'insertion, on fixe au moins un organe d'espacement (36) sur l'organe de support (8), l'organe d'espacement (36) étant configuré pour empêcher tout contact direct entre la paraison et l'organe de support (8) pendant l'étape d'insertion et l'étape de fermeture partielle du moule.

17. Procédé de fabrication d'un système de stockage de carburant (2) pour véhicule selon la revendication 15 ou 16, dans lequel, avant l'étape d'insertion, on équipe chaque vessie (6) d'une coque de protection (38) entourant ladite vessie (6), chaque coque de protection (38) étant configuré pour empêcher tout contact direct entre la paraison et les vessies (6) pendant l'étape d'insertion et l'étape de fermeture partielle du moule.

## Patentansprüche

1. Kraftstoffspeichersystem (2) für Fahrzeug, umfassend:
- einen Kraftstofftank (4),
- ein Trägerelement (8), das sich im Inneren des Tanks (4) erstreckt, und
- mehrere aufblasbare Blasen (6), die sich im Inneren des Tanks (4) erstrecken, wobei jede der aufblasbaren Blasen (6) von dem Trägerelement (8) getragen wird und an dem Trägerelement (8) befestigt ist.

2. Kraftstoffspeichersystem (2) für Fahrzeug nach Anspruch 1, wobei die Blasen (6) aus Polyethylen (PE), aus Polyamid (PA) oder in Form eines Mehrschichtaufbaus, der Polyethylen (PE), Polyamid (PA) und Ethylen-Vinylalkohol (EVOH) enthält, ausgebildet sind.

3. Kraftstoffspeichersystem (2) für Fahrzeug nach einem der vorhergehenden Ansprüche, wobei jede Blase (6) ein maximales Volumen zwischen 5 und 15 Liter aufweist.

4. Kraftstoffspeichersystem (2) für Fahrzeug nach einem der vorhergehenden Ansprüche, wobei die Summe aus dem maximalen Volumen jeder der Blasen (6) zwischen 25 und 35 Liter beträgt, bevorzugt gleich 30 Liter ist.

5. Kraftstoffspeichersystem (2) für Fahrzeug nach einem der vorhergehenden Ansprüche, wobei die Blasen (6) ausgelegt sind, um sich, bei ihrem Aufblasen/Entleeren, in zwei entgegengesetzten Richtungen zu verformen.

6. Kraftstoffspeichersystem (2) für Fahrzeug nach einem der vorhergehenden Ansprüche, wobei mindestens eine der Blasen (6) mit Kopplungsmitteln (20) versehen ist, die zum Aufnehmen eines Zubehörteils ausgelegt sind.

7. Kraftstoffspeichersystem (2) für Fahrzeug nach einem der vorhergehenden Ansprüche, wobei jede Blase (2) mit einem Ventil (18) versehen ist, das ausgelegt ist, um, abwechselnd, ihr Aufblasen/Entleeren zu gestatten oder zu verhindern.

8. Kraftstoffspeichersystem (2) für Fahrzeug nach einem der vorhergehenden Ansprüche, umfassend einen Luftkreislauf (10), der umfasst:
- einen Knotenpunkt (12),
- Versorgungsabschnitte (14), die den Knotenpunkt (12) mit dem Innenvolumen jeder der Blasen (6) verbindet, und
- einen Auslassabschnitt (16), der den Knotenpunkt (12) mit einem Auslass des Tanks (4) verbindet.

9. Kraftstoffspeichersystem (2) für Fahrzeug nach dem vorhergehenden Anspruch, wobei der Auslass des Tanks (4) an einem Filter (17) ausmündet, zum Beispiel ein Aktivkohlefilter oder Aktivkohlebehälter, der sich außerhalb des Tanks (4) befindet.

10. Kraftstoffspeichersystem (2) für Fahrzeug nach einem der vorhergehenden Ansprüche, wobei das Trägerelement (8) ein Blasenbefestigungsmittel (26, 28) umfasst, bevorzugt das Blasenbefestigungsmittel (26, 28) aus der folgenden Liste ausgewählt ist: Einrasten, gleitschienenartiges Befestigen, Schweißen.

11. Kraftstoffspeichersystem (2) für Fahrzeug nach einem der vorhergehenden Ansprüche, wobei das Trägerelement (8) an mindestens einer Wandung des Tanks (4) oder an mindestens einer Stütze (24), die sich im inneren des Tanks (4) erstreckt, befestigt ist.

12. Kraftstoffspeichersystem (2) für Fahrzeug nach einem der vorhergehenden Ansprüche, ferner umfassend mindestens ein Wärmespeicherorgan (34), das sich im Inneren des Tanks erstreckt und ein Phasenwechselmaterial umfasst, das einen Schmelzpunkt zwischen 18 ° und 40 °C aufweist, wobei das Phasenwechselmaterial bevorzugt aus der folgenden Liste ausgewählt ist: Calciumchlorid-Hexahydrat (CaCl_{2•}6H₂0), Octadecan (Ci₈H₃₈), Cyclohexanol (C₆H₁₂O), ein Glycerin-Derivat.

13. Kraftstoffspeichersystem (2) für Fahrzeug nach einem der vorhergehenden Ansprüche, ferner umfassend mindestens ein Abstandselement (36), das an dem Trägerelement (8) befestigt ist und ausgelegt ist, um jedweden Kontakt zwischen dem Tank (4) und dem Trägerelement (8) bei der Herstellung des Kraftstoffspeichersystems (2) zu verhindern.

14. Kraftstoffspeichersystem (2) für Fahrzeug nach einem der vorhergehenden Ansprüche, wobei jede Blase (6) mit einer Schutzschale (38) versehen ist, die die Blase (6) umgibt.

15. Verfahren zum Herstellen eines Kraftstoffspeichersystems (2) für Fahrzeug, wobei mindestens die folgenden Schritte durchgeführt werden:
- Bereitstellen eines Vorformlings in einem geöffneten Formwerkzeug,
- Anbringen, an einer Einführlanze oder einem Roboterarm, eines Trägerelements (8) und mehrerer aufblasbarer Blasen (6), wobei jede der aufblasbaren Blasen (6) von dem Trägerelement (8) getragen wird und an dem Trägerelement (8) befestigt ist,
- Einbringen, in das Innere des Vorformlings, des Trägerelements (8) und der Blasen (6), die von der Einführlanze oder dem Roboterarm getragen werden,
- Vorblasformen des Vorformlings und Inkontaktbringen des Vorformlings, direkt oder indirekt, mit dem Trägerelement (8),
- Herausziehen der Einführlanze oder des Roboterarms,
- Verschließen des Formwerkzeugs und
- Blasformen des Vorformlings, um einen Tank (4) zu erhalten, der das Trägerelement (8) und die Blasen (6) enthält.

16. Verfahren zum Herstellen einer Kraftstoffspeichersystems (2) für Fahrzeug nach dem vorhergehenden Anspruch, wobei, vor dem Schritt des Einbringens, mindestens ein Abstandselement (36) an dem Trägerelement (8) befestigt wird, wobei das Abstandselement (36) ausgelegt ist, um jedweden direkten Kontakt zwischen dem Vorformling und dem Trägerelement (8) während des Schrittes des Einbringens und des Schrittes des teilweisen Verschließens des Formwerkzeugs zu verhindern.

17. Verfahren zum Herstellen einer Kraftstoffspeichersystems (2) für Fahrzeug nach Anspruch 15 oder 16, wobei, vor dem Schritt des Einbringens, jede Blase (6) mit einer Schutzschale (38) versehen wird, die die Blase (6) umgibt, wobei jede Schutzschale (38) ausgelegt ist, um jedweden direkten Kontakt zwischen dem Vorformling und den Blasen (6) während des Schrittes des Einbringens und des Schrittes des teilweisen Verschließens des Formwerkzeugs zu verhindern.

## Claims

1. A fuel storage system (2) for a vehicle, comprising:
- a fuel tank (4),
- a support member (8) extending inside the tank (4), and
- a plurality of inflatable bladders (6) extending inside the tank (4), each of the inflatable bladders (6) being supported by the support member (8) and secured to the support member (8).

2. A fuel storage system (2) for a vehicle according to claim 1, wherein the bladders (6) are made of polyethylene (PE), polyamide (PA), or in the form of a multilayer comprising polyethylene (PE) and ethylene vinyl alcohol (EVOH).

3. A fuel storage system (2) for a vehicle according to any one of the preceding claims, wherein each bladder (6) has a maximum volume of between 5 and 15 liters.

4. A fuel storage system (2) for a vehicle according to any of the preceding claims, wherein the sum of the maximum volumes of each of the bladders (6) is between 25 and 35 liters, preferably equal to 30 liters.

5. A fuel storage system (2) for a vehicle according to any of the preceding claims, wherein the bladders (6) are configured to deform, during inflation or deflation, in two opposite directions.

6. A fuel storage system (2) for a vehicle according to any of the preceding claims, wherein at least one of the bladders (6) is equipped with coupling means (20) configured to receive an accessory.

7. A fuel storage system (2) for a vehicle according to any of the preceding claims, wherein each bladder (2) is equipped with a valve (18) configured to alternately allow or prevent their inflation and deflation.

8. A fuel storage system (2) for a vehicle according to any of the preceding claims, comprising an air circuit (10) comprising:
- a node (12),
- supply sections (14) connecting the node (12) to the internal volume of each of the bladders (6), and
- an outlet section (16) connecting the node (12) to an outlet of the tank (4).

9. A fuel storage system (2) for a vehicle according to the preceding claim, wherein the outlet of the tank (4) opens into a filter (17), for example an activated carbon filter or canister, located outside the tank (4).

10. A fuel storage system (2) for a vehicle according to any one of the preceding claims, wherein the support member (8) comprises a bladder fastening means (26, 28), preferably the bladder fastening means (26, 28) is selected from the following list: clipping, slide-type fastening, welding.

11. A fuel storage system (2) for a vehicle according to any one of the preceding claims, wherein the support member (8) is secured to at least one wall of the tank (4) or to at least one strut (24) extending inside the tank (4).

12. A fuel storage system (2) for a vehicle according to any one of the preceding claims, further comprising at least one heat storage element (34) extending inside the tank, comprising a phase-change material having a melting point between 18° and 40°C, the phase-change material being preferably selected from the following list: calcium chloride hexahydrate (CaCl₂·6H₂O), octadecane (_{C18H38}), cyclohexanol (C₆H₁₂O), a glycerin derivative.

13. A fuel storage system (2) for a vehicle according to any of the preceding claims, further comprising at least one spacer (36) secured to the support member (8) and configured to prevent any contact between the tank (4) and the support member (8) during the manufacture of the fuel storage system (2).

14. A fuel storage system (2) for a vehicle according to any one of the preceding claims, wherein each bladder (6) is equipped with a protective shell (38) surrounding said bladder (6).

15. A method for manufacturing a fuel storage system (2) for a vehicle, comprising at least the following steps:
- providing a parison in an open mold,
- mounting, on an insertion rod or a robot arm, a support member (8) and a plurality of inflatable bladders (6), each of the inflatable bladders (6) being carried by the support member (8) and secured to the support member (8),
- inserting, into the parison, the support member (8) and the bladders (6) carried by the insertion rod or the robot arm,
- pre-blowing the parison and bringing the parison into contact, directly or indirectly, with the support member (8),
- withdrawal of the insertion rod or the robot arm,
- closing the mold, and
- blowing the parison to form a container (4) containing the support member (8) and the bladders (6).

16. A method for manufacturing a fuel storage system (2) for a vehicle according to the preceding claim, wherein, prior to the insertion step, at least one spacer (36) is secured to the support member (8), the spacer member (36) being configured to prevent any direct contact between the parison and the support member (8) during the insertion step and the partial mold closure step.

17. A method for manufacturing a fuel storage system (2) for a vehicle according to claim 15 or 16, wherein, prior to the insertion step, each bladder (6) is fitted with a protective shell (38) surrounding said bladder (6), each protective shell (38) being configured to prevent any direct contact between the parison and the bladders (6) during the insertion step and the partial mold closure step.
